# EUROPÄISCHE PATENTSCHRIFT

(11) **EP 1 939 207 B1**
(45) Veröffentlichungstag und Bekanntmachung des Hinweises auf die Patenterteilung: **03.03.2010**
(21) Anmeldenummer: 07123496.7
(22) Anmeldetag: 18.12.2007
(51) Int. Cl.: C07F 7/18, C07F 7/08, C08G 77/04

(54) **Organosiliciumverbindungen und deren Verwendung in vernetzbaren Massen**
Organosilicon compounds and their use in crosslinkable compositions
Composés organosiliciques et leur utilisation dans des compositions réticulables

(30) Priorität: 27.12.2006 DE 102006061584
(43) Veröffentlichungstag der Anmeldung: 02.07.2008
(73) Patentinhaber: Wacker Chemie AG, 81737 München (DE)
(72) Erfinder: Prasse, Marko, 01612, Glaubitz (DE)
(74) Vertreter: Budczinski, Angelika

(56) Entgegenhaltungen:
- DE-A- 244 552
- DE-B- 1 008 732
- US-A- 3 029 269
- US-A- 4 148 773
- US-A1- 2006 107 876
- DATABASE CA [Online] CHEMICAL ABSTRACTS SERVICE, COLUMBUS, OHIO, US; NARAIN, R. P. ET AL: "Reactions of methyltrimethoxysilane with glycols. Part I" XP002470098 gefunden im STN Database accession no. 88:23034 & JOURNAL OF THE INDIAN CHEMICAL SOCIETY , 54(5), 504-7 CODEN: JICSAH; ISSN: 0019-4522, 1977,

## Beschreibung

Die Erfindung betrifft durch Kondensationsreaktion vernetzbaren Massen, die bevorzugt als Dichtmassen eingesetzt werden können.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen, tragen, sowie Vernetzer, wie zum Beispiel Alkoxysilane, siehe z.B. GB 913 295.

Vor allem für Fugendichtmassen ist es erwünscht, dass die Umgebung der Fugen nicht hydrophobiert wird. Besonders gilt das für Anwendungen in Kontakt mit Natursteinen und Gläser. Darüber hinaus ist eine gleichmäßige Durchhärtung ohne Gradient erwünscht.

Beschrieben werden Organosiliciumverbindungen enthaltend Einheiten der Formel

R_{d}XₑSiY_{(4-d-e)/2} (I),

wobei
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und Hydroxylgruppen oder einwertige, hydrolysierbare Reste bedeutet,
Y gleich oder verschieden sein kann und -O- oder einen difunktionellen hydrolysierbaren Rest bedeutet,
d gleich 0, 1, 2 oder 3, bevorzugt 0 oder 1, ist und
e gleich 0, 1, 2 oder 3, bevorzugt 0, 1 oder 2, ist,
mit der Maßgabe, dass die Summe d+e<3 ist, pro Molekül 2 bis 100 Einheiten der Formel (I) vorhanden sind und pro Molekül mindestens 1 Rest Y gleich difunktionellem hydrolysierbaren Rest sowie mindestens ein Rest X anwesend sind.

Bevorzugt enthält die Organosiliciumverbindung mindestens zwei Reste X, besonders bevorzugt mindestens 3 Reste X, wobei X eine der oben genannten Bedeutungen hat.

In den Organosiliciumverbindungen haben bevorzugt mindestens 10 %, besonders bevorzugt 20 bis 50 %, der Reste Y die Bedeutung von difunktionellem hydrolysierbaren Rest.

Bevorzugt handelt es sich bei Rest R um einwertige, gegebenenfalls mit Sauerstoffatome und/oder Stickstoffatome aufweisenden Gruppen substituierte Kohlenwasserstoffreste mit 1 bis 18 Kohlenstoffatomen, besonders bevorzugt um Alkylreste, den Vinylrest, den Phenylrest, den Aminopropylrest, den Aminoethylaminopropylrest, den Glycidoxypropylrest, den O-Methyl-Carbamatomethylrest, den Morpholinomethylrest, den Phenylaminomethylrest und den Cyclohexylaminomethylrest, insbesondere um den Methyl-, Vinyl- oder Aminopropylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für Reste X sind Hydroxylgruppe, Acetoxyreste, Oximatoreste und Organyloxyreste -OR¹, wobei R¹ einwertige, gegebenenfalls substituierte Kohlenwasserstoffreste, die durch Sauerstoffatome unterbrochen sein können, bedeutet, wie z.B. Methoxyreste, Ethoxyreste, Alkoxyethoxyreste und hydroxyhaltige Reste, wie 2-Hydroxypropoxy-, 2-Hydroxy-1-Methyl-propoxy-, 2-Hydroxybutoxy-, 1-Hydroxy-2-Methyl-ethoxy- oder 2-Hydroxyethoxyrest.

Beispiele für Reste R¹ sind die für R angegebenen Reste.

Bevorzugt handelt es sich bei Rest X um Organyloxyreste -OR¹,
wobei R¹ die obengenannte Bedeutung hat, besonders bevorzugt um den Methoxy- und Ethoxyrest, insbesondere um den Methoxyrest.

Bevorzugt handelt es sich bei höchstens 30%, besonders bevorzugt höchstens 20%, der Reste X um Hydroxylgruppen.

Beispiele für Reste Y sind -O- und zweiwertige Organyloxyreste -OR²O-, wobei R² zweiwertige, gegebenenfalls substituierte Kohlenwasserstoffreste, die durch Sauerstoffatome unterbrochen sein können, bedeutet.

Beispiele für Reste R² sind Ethylen-, Propylen- und Butylenreste sowie mit Sauerstoffatomen unterbrochene Kohlenwasserstoffreste, wie z.B. -CH₂CH₂-O-(CH₂CH₂O)ₙ-CH₂CH₂- mit n gleich 0 oder eine ganze Zahl von 1 bis 10, insbesondere 0 oder eine ganze Zahl von 1 bis 3.

Bevorzugt handelt es sich bei Rest R² um zweiwertige Kohlenwasserstoffreste mit 2 bis 10 Kohlenstoffatomen, die mit Sauerstoffatomen unterbrochen sein können, besonders bevorzugt um
-CH₂CH₂-(OCH₂CH₂)ₙ-,
-CH (CH₃)CH₂-(OCH (CH₃)CH₂)ₙ-, -CH₂CH₂CH₂- (OCH₂CH₂CH₂)ₙ-,
-CH(CH₃)CH(CH₃)-(OCH(CH₃)CH(CH₃))ₙ-,
-CH (CH₂CH₃)CH₂-(OCH(CH₂CH₃)CH₂)ₙ-, und
-CH₂CH₂CH₂CH₂-(OCH₂CH₂CH₂CH₂)ₙ-,
-CH₂CH₂CH(CH₃)-(OCH₂CH₂CH(CH₃))ₙ- und
-CH₂CH(CH₃)CH₂-(OCH₂CH(CH₃)CH₂)ₙ-,
mit n jeweils gleich 0, 1 oder 2.

Bevorzugt handelt es sich bei Rest Y um die Reste -O-,
-O-CH₂CH₂-(OCH₂CH₂)ₙ-O-,
-OCH (CH₃)CH₂-(OCH (CH₃)CH₂)ₙ-O-, -OCH₂CH₂CH₂-(OCH₂CH₂CH₂)ₙ-O-,
-OCH (CH₃)CH (CH₃)-(OCH (CH₃)CH (CH₃))ₙ-O-,
-OCH (CH₂CH₃)CH₂-(OCH (CH₂CH₃)CH₂)ₙ-O-,
-OCH₂CH₂CH₂CH₂-(OCH₂CH₂CH₂CH₂)ₙ-O-,
-OCH₂CH₂CH(CH₃)-(OCH₂CH₂CH(CH₃))ₙ-O-,
-OCH(CH₃)CH(CH₃)-(OCH(CH₃)CH(CH₃))ₙ-O- und
-OCH₂CH(CH₃)CH₂-(OCH₂CH(CH₃)CH₂)ₙ-O-,
insbesondere um den Rest -OCH(CH₃)CH₂-(OCH(CH₃)CH₂)ₙ-O- mit n jeweils gleich 0, 1 oder 2.

Bevorzugt handelt es sich bei der Organosiliciumverbindung um solche, die 2 bis 50, insbesondere 2 bis 15, Einheiten der Formel (I) enthalten.

Besonders bevorzugt handelt es sich bei der erfindungsgemäßen Organosiliciumverbindung um solche, die aus Einheiten der Formel (I) bestehen.

Bei den Organosiliciumverbindungen handelt es sich bevorzugt um bei Raumtemperatur und dem Druck der umgebenden Atmosphäre, also 900 bis 1100 hPa, flüssige Verbindungen.

Die Organosiliciumverbindung hat eine Viskosität von bevorzugt 1,0 bis 1000 mm²/s, besonders bevorzugt 2,0 bis 10 mm²/s, jeweils bei 25°C.

Die Organosiliciumverbindung hat einen Flammpunkt von bevorzugt 15 bis 200°C, besonders bevorzugt 15 bis 100°C, insbesondere von 20 bis 50°C, jeweils bestimmt nach DIN 51 755 (Abel-Pensky).

Die Organosiliciumverbindung kann linear, verzweigt oder cyclisch sein, bevorzugt linear oder verzweigt.

Bevorzugt handelt es sich bei der Organosiliciumverbindung um Verbindungen der Formel

[X_{g}R_{3-g}SiY_{1/2}-]ₚ [XᵢR₂₋ᵢSiY_{2/2}-]_{q} [XₘR₁₋ₘSiY_{3/2}-]ᵣ [SiY_{4/2}-]ₛ (II),

wobei
R, X und Y die jeweils oben dafür angegebene Bedeutungen haben, g gleich 0, 1, 2 oder 3, bevorzugt 2 oder 3, ist,
i 0, 1 oder 2, bevorzugt 1 oder 2, ist,
m gleich 0 oder 1 ist,
p gleich 0 oder eine ganze Zahl von 1 bis 10 ist,
q gleich 0 oder eine ganze Zahl von 1 bis 90 ist,
r gleich 0 oder eine ganze Zahl von 1 bis 10 ist und
s gleich 0 oder eine ganze Zahl von 1 bis 10 ist,
mit der Maßgabe, dass die Summe (p+q+r+s) eine Zahl von 2 bis 100 ist, die Einheiten statistisch verteilt sein können und pro Molekül mindestens ein Rest Y gleich difunktionellem hydrolysierbaren Rest sowie mindestens ein Rest X anwesend sind.

Beispiele für die Organosiliciumverbindungen sind (MeO)₂SiMe-[OCH(Me)CH₂O-SiMe(OMe)]₁₋₉₉(OMe),
(-OCH (Me) CH₂O-)SiMe- [OCH (Me) CH₂O-SiMe(OMe)]₁₋₉₉(OMe),
[-OCH(Me)CH₂O-SiMe(OMe)-]₂,
(MeO)₂SiVi-[OCH(Me)CH₂O-SiVi(OMe) ]₁₋₉₉(OMe),
(-OCH (Me) CH₂O-)SiVi- [OCH (Me) CH₂O-SiVi(OMe)]₁₋₉₉(OMe),
(MeO)₂Si(CH₂CH₂CH₂NH₂) - [OCH (Me) CH₂O-Si(CH₂CH₂CH₂NH₂)(OMe) ]₁₋₉₉(OMe),
(-OCH (Me)CH₂O-)Si(CH₂CH₂CH₂NH₂)-[OCH(Me) CH₂O-Si (CH₂CH₂CH₂NH₂)(OMe) ]₁₋₉₉(OMe) ,
(MeO)₂Si(CH₂NH-cyc-hex)-[OCH (Me) CH₂O-Si(CH₂NH-cyc-hexyl)(OMe)]₁₋₉₉(OMe),
(-OCH (Me) CH₂O-)Si (CH₂NH-cyc-hexyl)-[OCH (Me) CH₂O-Si(CH₂NH-cyc-hexyl) (OMe) ]₁₋₉₉(OMe) ,
(MeO)₂SiMe-[OCH (Me) CH₂O-Si(CH₂CH₂CH₂NH₂)(OMe) ]₁₋₉₉(OMe),
(EtO)₂SiMe-[OCH(Me)CH₂O-SiMe(OEt)]₁₋₉₉(OEt),
(MeO)₃Si-[OCH (Me) CH₂O-Si(OMe) ₂]₁₋₉₉(OMe),
(EtO)₃Si-[OCH (Me) CH₂O-Si(OEt)₂]₁₋₉₉(OEt),
(MeO)₂SiMe-[OCH₂CH₂O-SiMe(OMe) ]₁₋₉₉(OMe) ,
(-OCH₂CH₂O-)SiMe-[OCH₂CH₂O-SiMe(OMe)]₁₋₉₉(OMe),
(MeO)₂SiMe-[OCH (Me) CH (Me) O-SiMe(OMe) ]₁₋₉₉(OMe),
(-OCH(Me)CH(Me)O-)SiMe-[OCH(Me)CH(Me)O-SiMe(OMe)]₁₋₉₉(OMe),
(MeO)₂SiMe-[OCH (Me) CH₂OCH (Me) CH₂O-SiMe (OMe)]₁₋₉₉(OMe),
(-OCH(Me)CH₂OCH(Me)CH₂O-)SiMe-[OCH(Me)CH₂OCH(Me) CH₂O-SiMe (OMe) ]₁₋₉₉(OMe),
(MeO) ₂SiMe-[OCH (Me) CH₂O-SiMe (OMe) ]₁₋₉₉ (-OSiMe (OMe) ₂),
(MeO)₂SiMe-[OCH (Me) CH₂O-SiMe (OMe) ]₁₋₈₉ (-OSiMe (OMe)) ₁₋₁₀ (OMe),
(MeO) ₃Si- [OCH (Me) CH₂O-Si (OMe) ₂]₁₋₈₉ (-OSi (OMe) ₂) ₁₋₁₀ (OMe) ,
(MeO) ₂Si (CH₂CH₂CH₂NH₂)- [OCH (Me) CH₂O-SiVi (OMe) ] ₁₋₉₉ (-OSiMe (OMe) ₂),
(MeO) ₂SiVi-[OCH (Me) CH₂O-Si (CH₂CH₂CH₂NH₂) (OMe) ]₁₋₈₉ (-OSiMe (OMe)) ₁₋₁₀(OMe),
(EtO) ₃Si- [OCH (Me) CH₂O-Si (OEt) ₂]₁₋₈₉ (-OSi (OEt) ₂) ₁₋₁₀ (OEt) ,
(MeO) ₂SiMe- [OCH (Me) CH₂O-SiMe (OMe) ] ₁₋₈₉ (-OSiMe₂) ₁₋₁₀ (OMe),
(MeO)₂SiMe-[OCH(Me)CH₂O-SiMe(OMe) ] ₁₋₈₉(-OSiMe(OMe))₂ (SiMe(OMe)₂)₁,
[ (MeO) ₂SiMe (OCH (Me) CH₂O) _{1/2}]₁₋₂₅-[(OCH (Me) CH₂O) _{2/2}SiMe (OMe) ]₁₋₅₀-[SiMe (OCH (Me)CH₂O) _{3/2}]₁₋₂₅,
[ (MeO) ₂SiVi (OCH (Me) CH₂O) _{1/2}]₁₋₂₅- [(OCH (Me) CH₂O) _{2/2}SiVi (OMe) ]₁₋₅₀-[SiVi (OCH (Me)CH₂O) _{3/2}]₁₋₂₅,
[ (MeO) ₂Si (CH₂NHC (=O) OMe) (OCH (Me) CH₂O) _{1/2}]₁₋₂₅-[ (OCH (Me) CH₂O) _{2/2}Si (CH₂NHC (=O) OMe) (OMe) ]₁₋₅₀-[Si (CH₂NHC (=O) OMe) (OCH (Me) CH₂O) _{3/2}]₁₋₂₅,
[(EtO)₃Si (OCH (Me) CH₂O)_{1/2}]₁₋₃₀- (OCH (Me) CH₂O) _{2/2}-Si (OEt) ₂]₁₋₄₀-[Si (OEt) (OCH (Me) CH₂O) _{3/2}]₁₋₂₀-[Si (OCH (Me) CH₂O) _{4/2}]₁₋₅,
[(MeO)₃Si(OCH (Me) CH₂O)_{1/2}]₁₋₃₀-[(OCH(Me) CH₂O)_{2/2}-Si(OMe) ₂]₁₋₄₀-[Si (OMe) (OCH (Me) CH₂O)_{3/2}]₁₋₂₀-[Si(OCH (Me) CH₂O)_{4/2}]₀₋₅und
[(MeO)₃Si(OCH (Me) CH₂O)_{1/2}]₁₋₁₅-[(MeO)3SiO_{1/2}]₁₋₁₅-[(OCH(Me) CH₂O)_{2/2}-Si (OMe) ₂]₁₋₂₀-[O_{2/2}-Si(OMe) ₂]₁₋₂₀-[Si(OMe) (OCH (Me) CH₂O)_{3/2}]₁₋₁₀-[Si (OMe) O_{3/2}]₁₋₁₀-[Si(OCH (Me) CH₂O)_{4/2}]₀₋₂ -[SiO_{4/2}]₀₋₂,
wobei Me gleich Methylrest, Et gleich Ethylrest, -cyc-hexyl gleich Cyclohexylrest und Vi gleich Vinylrest ist.

Bevorzugt handelt es sich bei den Organosiliciumverbindungen um
(MeO)₂SiMe-[OCH (Me) CH₂O-SiMe(OMe) ]₁₋₉₉(OMe) ,
(-OCH (Me) CH₂O-)SiMe- [OCH (Me) CH₂O-SiMe(OMe) ]₁₋₉₉(OMe) ,
(MeO)₂SiVi-[OCH (Me) CH₂O-SiVi(OMe) ]₁₋₉₉(OMe) ,
(-OCH (Me) CH₂O-)SiVi- [OCH (Me) CH₂O-SiVi(OMe) ]₁₋₉₉(OMe),
(EtO)₂SiMe-[OCH(Me) CH₂O-SiMe(OEt) ]₁₋₉₉(OEt),
(MeO)₃Si-[OCH (Me) CH₂O-Si(OMe) ₂]₁₋₉₉(OMe),
(EtO)₃Si-[OCH (Me) CH₂O-Si(OEt) ₂]₁₋₉₉(OEt),
(EtO)₃Si-[OCH (Me) CH₂O-Si(OEt) ₂]₁₋₈₉(-OSi (OEt) ₂)₁₋₁₀ (OEt) ,
(MeO)₂SiMe-[OCH (Me) CH₂O-SiMe(OMe) ]₁₋₈₉(-OSiMe₂)₁₋₁₀(OMe),
(MeO)₂SiMe-[OCH(Me)CH₂O-SiMe(OMe)]₁₋₈₉(-OSiMe(OMe))₂ (SiMe(OMe)₂)₁,
[(MeO)₂SiMe(OCH (Me) CH₂O)_{1/2}]₁₋₂₅-[(OCH(Me)CH₂O)_{2/2}SiMe(OMe)]₁₋₅₀-[SiMe (OCH (Me)CH₂O)_{3/2}]₁₋₂₅,
[(MeO)₂SiVi(OCH (Me) CH₂O)_{1/2}]₁₋₂₅-[(OCH(Me) CH₂O)_{2/2}SiVi(OMe)]₁₋₅₀-[SiVi (OCH (Me)CH₂O)_{3/2}]₁₋₂₅,
[(MeO)₂Si(CH₂NHC(=O)OMe) (OCH (Me) CH₂O)_{1/2}]₁₋₂₅-[(OCH(Me) CH₂O)_{2/2}Si(CH₂NHC(=O)OMe) (OMe) ]₁₋₅₀-[Si(CH₂NHC(=O)OMe) (OCH (Me)CH₂O)_{3/2}]₁₋₂₅,
[(EtO)₃Si(OCH (Me) CH₂O)_{1/2}]₁₋₃₀-[(OCH(Me) CH₂O)_{2/2}-Si(OEt) ₂]₁₋₄₀-[Si (OEt) (OCH (Me) CH₂O)_{3/2}]₁₋₂₀-[Si(OCH (Me) CH₂O)_{4/2}]₀₋₅,
[(MeO)₃Si(OCH (Me) CH₂O)_{1/2}]₁₋₃₀-[(OCH(Me) CH₂O)_{2/2}-Si(OMe) ₂]₁₋₄₀-[Si (OMe) (OCH (Me) CH₂O)_{3/2}]₁₋₂₀-[Si(OCH (Me) CH₂O)_{4/2}]₀₋₅ und
[ (MeO) ₃Si (OCH (Me) CH₂O)_{1/2}]₁₋₁₅- [ (MeO) ₃SiO_{1/2}]₁₋₁₅- [ (OCH (Me) CH₂O) _{2/2}-Si (OMe) ₂] ₁₋₂₀- [O_{2/2}-Si (OMe) ₂] ₁₋₂₀- [Si (OMe) (OCH (Me) CH₂O) _{3/2}] ₁₋₁₀-[Si (OMe) O_{3/2}]₁₋₁₀-[Si (OCH (Me) CH₂O) _{4/2}] ₀₋₂-[SiO_{4/2}]₀₋₂,
wobei Me gleich Methylrest, Et gleich Ethylrest und Vi gleich Vinylrest ist.

Besonders bevorzugt handelt es sich bei den Verbindungen um (MeO)₂SiMe-[OCH(Me) CH₂O-SiMe(OMe) ]₁₋₅₀(OMe) ,
(MeO)₂SiVi-[OCH (Me) CH₂O-SiVi(OMe) ]₁₋₅₀(OMe) , (MeO)₃Si-[OCH(Me) CH₂O-Si(OMe) ₂]₁₋₉₉(OMe) ,
(EtO)₃Si-[OCH (Me) CH₂O-Si(OEt) ₂]₁₋₅₀(OEt) ,
[(MeO)₂SiMe(OCH (Me) CH₂O)_{1/2}]₁₋₁₀-[(OCH(Me) CH₂O)_{2/2}SiMe(OMe) ]₁₋₂₀-[SiMe (OCH (Me) CH₂O)_{3/2}]₁₋₈,
[(MeO)₂Si(CH₂NHC(=O)OMe) (OCH (Me) CH₂O)_{1/2}]₁₋₁₀-[(OCH(Me) CH₂O)_{2/2}Si(CH₂NHC(=O)OMe) (OMe)]₁₋₂₀-[Si(CH₂NHC(=O)OMe) (OCH (Me) CH₂O)_{3/2}]₁₋₈ und
[(EtO)₃Si(OCH (Me) CH₂O)_{1/2}]₁₋₁₂-[(OCH(Me) CH₂O)_{2/2}-Si(OEt-)₂]₁₋₂₀-[Si (OEt) (OCH(Me) CH₂O)_{3/2}]₁₋₅-[Si(OCH (Me) CH₂O)_{4/2}]₁₋₃, insbesondere um ([(MeO)₂SiMe(OCH (Me)CH₂O)_{1/2}]₁₋₁₀-[(OCH(Me)CH₂O)_{2/2}SiMe(OMe)]₁₋₂₀-[SiMe(OCH(Me)CH₂O)_{3/2}]₀₋₈, wobei Me gleich Methylrest, Vi gleich Vinylrest und Et gleich Ethylrest ist.

Die Organosiliciumverbindungen können nach beliebigen und vielfach bekannten Methoden hergestellt werden, wie z.B. durch eine Veresterung von Silanen mit drei und/oder vier hydrolysierbaren Gruppen mit Alkoholen und Diolen. Dabei kann auch teilweise hydrolysiert werden und/oder Silane mit einer und/oder zwei hydrolysierbaren Gruppen anwesend sein.

Bevorzugt werden die Organosiliciumverbindungen durch Umesterung von Silanen, die drei und/oder vier Alkoxygruppen aufweisen, mit Diolen, bevorzugt in Anwesenheit von Umesterungskatalysatoren, hergestellt. Als Umesterungskatalysator können alle bekannten sauren oder basischen Katalysatoren, wie z.B. saure oder basische Ionenaustauscher, Salzsäure, Si-Cl-haltige Verbindungen, Schwefelsäure, Sulfonsäurederivate, lineare Phosphornitrilchloride oder deren Umsetzungsprodukte mit Aminen, starke Basen bzw. deren Umsetzungsprodukte mit Siloxanen, aber auch Alkoxytitanate oder Alkoxyzirkonate, verwendet werden. Gegebenenfalls kann Wasser zugegeben werden. Vorteilhafterweise werden die Katalysatoren nach erfolgter Umsetzung durch geeignete Maßnahmen, wie z.B. durch Behandlung mit Ionenaustauscher und/oder Filtration, Neutralisation, Behandlung mit Metallen, wie z.B. Eisen, oder Ausheizen, entfernt oder desaktiviert. Das so erhaltene Produkt kann - falls erwünscht - von niedermolekularen Verbindungen getrennt werden, wie etwa durch eine einfache Destillation oder mittels Durchlaufen eines Dünnschichtverdampfers. Die niedermolekularen Verbindungen können auch während der Reaktion entfernt werden, z.B. durch Destillation.

Gegenstand der Erfindung sind durch Kondensationreaktion vernetzbare Massen, die Organosiliciumverbindungen enthaltend Einheiten der Formel

R_{d}XₑSiY_{(4-d-e)/2} (I),

wobei
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und Hydroxylgruppen oder einwertige, hydrolysierbare Reste bedeutet,
Y gleich oder verschieden sein kann und-O- oder zweiwertige Organyloxyreste -OR²O- bedeutet, wobei R² zweiwertige, gegebenenfalls substituierte Kohlenwasserstoffreste, die durch Sauerstoffatome unterbrochen sein können, bedeutet,
d gleich 0, 1, 2 oder 3 ist und
e gleich 0, 1, 2 der 3 ist, mit der Maßgabe, dass die Summe d+e≤3 ist, pro Molekül 2 bis 100 Einheiten der Formel (I) vorhanden sind und pro Molekül mindestens 1 Rest Y gleich zweiwertigem Organyloxyrest -OR²O-sowie mindestens ein Rest X anwesend sind,
enthalten.

Im Rahmen der vorliegenden Erfindung soll die Bezeichnung "Kondensationsreaktion" auch einen gegebenenfalls vorangehenden Hydrolyseschritt mitumfassen.

Zusätzlich zu der oben beschriebene erfindungsgemäßen Organosiliciumverbindung können die erfindungsgemäßen Massen nun alle Stoffe enthalten, die auch bisher in durch Kondensationsreaktion vernetzbaren Massen eingesetzt worden sind, wie z.B. Organosiliciumverbindung mit mindestens zwei kondensationsfähigen Gruppen (A), Vernetzer (C), die verschieden sind zu Komponente (B), Katalysatoren (D), Weichmacher (E), Füllstoffe (F), Haftvermittler (G) und Additive (H).

Besonders bevorzugt handelt es sich bei den erfindungsgemäßen Massen um solche enthaltend
(A) Organosiliciumverbindung mit mindestens zwei kondensationsfähigen Gruppen,
(B) Organosiliciumverbindung enthaltend Einheiten der Formel (I),
   gegebenenfalls
(C) Vernetzer,
(D) Katalysator,
   gegebenenfalls
(E) Füllstoffe,
   gegebenenfalls
(F) Haftvermittler,
   gegebenenfalls
(G) Weichmacher und
   gegebenenfalls
(H) Additive.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also ≡Si-O-Si≡ -Strukturen, als auch um Silcarbane, also ≡Si-R''-Si≡ -Strukturen mit R'' gleich einem zweiwertigen, gegebenenfalls substituierten oder mit Heteroatomen unterbrochenen Kohlenwasserstoffrest oder beliebigen Organosiliciumgruppen aufweisende Copolymere handeln.

Im Rahmen der vorliegenden Erfindung sollen unter der Bezeichnung "kondensationsfähige Reste" auch solche Reste verstanden werden, aus denen in einem gegebenenfalls vorangehenden Hydrolyseschritt kondensationsfähige Gruppen erzeugt werden.

Bevorzugt handelt es sich bei den erfindungsgemäß eingesetzten Organosiliciumverbindungen (A) um solche enthaltend Einheiten der Formel

R³ₐZ_{b}SiO_{(4-a-b)/2} (III),

wobei
R³ gleich oder verschieden sein kann und gegebenenfalls substituierte Kohlenwasserstoffreste, die durch Sauerstoffatome unterbrochen sein können, bedeutet,
Z gleich oder verschieden sein kann und Hydroxylrest oder hydrolysierbare Reste bedeutet,
a 0, 1, 2 oder 3, bevorzugt 1 oder 2, ist und
b 0, 1, 2 oder 3, bevorzugt 0, 1 oder 2, besonders bevorzugt 0, ist,
mit der Maßgabe, dass die Summe aus a+b kleiner oder gleich 4 ist und pro Molekül mindestens zwei kondensationsfähige Reste Z anwesend sind.

Bevorzugt ist die Summe a+b kleiner oder gleich 3.

Bevorzugt handelt es sich bei Rest R³ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest R³ aber auch um zweiwertige Reste handeln, die z.B. zwei Silylgruppen miteinander verbinden.

Beispiele für Rest R³ sind die für Rest R angegebenen Beispiele.

Beispiele für zweiwertige Reste R³ sind Polyisobutylendiylreste, Polymethacrylsäuremethylesterdiylreste, Polymethacrylsäurebutylesterdiylreste und propandiylterminierte Polypropylenglykolreste.

Beispiele für Reste Z sind die für X angegebenen Beispiele.

Bevorzugt handelt es sich bei Rest Z um Organyloxyreste -OR¹, wobei R¹ die obengenannte Bedeutung hat, besonders bevorzugt um den Methoxy- und Ethoxyrest, insbesondere um den Methoxyrest.

Besonders bevorzugt handelt es sich bei erfindungsgemäß eingesetzten Organosiliciumverbindungen (A) um solche der Formel

Z₃₋ᵤR³ᵤSi-O- (SiR³₂-O)ᵥ-SiR³ᵤZ₃₋ᵤ (IV),

wobei
R³ und Z jeweils eine der oben angegebenen Bedeutungen haben,
v gleich 30 bis 3000 ist und
u gleich oder verschieden sein kann und 0, 1 oder 2 ist.

Vorzugsweise ist u gleich 2, wenn Z die Bedeutung von Hydroxylgruppe hat, und u gleich 0 oder 1, wenn R³ eine Bedeutung verschieden Hydroxylgruppe hat.

Beispiele für Organosiliciumverbindungen (A) sind
(MeO)₂MeSiO[SiMe₂O]₂₀₀₋₂₀₀₀SiMe(OMe)₂,
(MeO)₂MeSiO[SiMe₂O]₂₀₀₋₂₀₀₀SiMe(OEt)₂,
(MeO)₃SiO[SiMe₂O]₂₀₀₋₂₀₀₀SiMe(OMe)₂,
(MeO)₃SiCH₂CH₂[SiMe₂O]₂₀₀₋₂₀₀₀SiMe₂-CH₂CH₂Si(OMe) ₃,
(HO)Me₂SiO[SiMe₂O]₂₀₀₋₂₀₀₀SiMe₂(OH),
(EtO)₂MeSiO[SiMe₂O]₂₀₀₋₂₀₀₀SiMe(OEt)₂,
(HO)MeViSiO[SiMe₂O]₂₀₀₋₂₀₀₀SiMeVi(OH),
(MeO)₂MeSiO[SiMe₂O]₂₀₀₋₂₀₀₀SiVi(OMe)₂,
(MeO)₂ViSiO[SiMe₂O]₂₀₀₋₂₀₀₀SiVi(OMe)₂ und
(EtO)₂ViSiO[SiMe₂O]₂₀₀₋₂₀₀₀SiVi(OEt)₂,
wobei Me Methylrest, Et Ethylrest und Vi Vinylrest bedeutet.

Es kann sich bei Komponente (A) aber auch um silylierte organische Verbindungen mit mindestens zwei kondensationsfähigen Gruppen handeln, wie z.B. silylierte Acrylate, silylierte Vinylpolymere, silylierte Polyurethane und silylierte Polyglykole. Die Polymere können linear, verzweigt oder eine Mischung aus beidem sein. Weiterhin können die Polymere gleiche oder verschiedene Endgruppen, wie z.B. Mischungen aus Methyldimethoxysilyl- und Trimethoxysilyl-Endgruppen, enthalten. Die Silylierung kann durch bekannte Verfahren durchgeführt werden. Solche sind z.B. die Hydrosilylierung mit HSi(OMe)₂(Me) an im Polymer vorhandene Doppelbindungen, die Addition von aminofunktionellen Silanen oder Siloxanen an isocyanatohaltigen Prepolymeren, die Addition von isocyanatofunktionellen Silanen an Hydroxylgruppenhaltige Polymere wie z.B. Polyglykole oder durch Copolymerisation von Monomeren mit Doppelbindung mit Vinylsilanen, wie Vinyltrimethoxysilan oder Methylvinyldimethoxysilan.

Die erfindungsgemäß eingesetzten Organosiliciumverbindungen (A) haben eine Viskosität von bevorzugt 100 bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Die erfindungsgemäßen Massen enthalten Komponente (B) in Mengen von vorzugsweise 0,5 bis 30 Gewichtsteilen, besonders bevorzugt 2 bis 15 Gewichtsteilen, jeweils bezogen auf 100 Gewichtsteile Komponente (A).

Bei den in den erfindungsgemäßen Massen gegebenenfalls eingesetzten Vernetzern (C) kann es sich um beliebige, bisher bekannte Vernetzer mit mindestens zwei kondensationsfähigen Resten handeln, wie beispielsweise Silane mit mindestens zwei Organyloxygruppen, die von Komponente (B) verschieden sind.

Besonders bevorzugt handelt es sich bei den in den erfindungsgemäßen Massen gegebenenfalls eingesetzten Vernetzern (C) um Silanvernetzer, wie Tetramethoxysilan, Tetraethoxysilan, Tetrapropoxysilan, Tetrabutoxysilan, Methyltrimethoxysilan, Dimethyldimethoxysilan, Methyltriethoxysilan, Methylvinyldimethoxysilan, Vinyltrimethoxysilan, Butyltrimethoxysilan, Vinyltriethoxysilan, Phenyltrimethoxysilan, Diphenyldimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis-(trimethoxysilyl)ethan, 1,2-Bis(triethoxysilyl)ethan, 3-Aminopropyltrimethoxysilan, 3-(2-Aminoethyl)aminopropyltrimethoxysilan, 3-(2-Aminoethyl)aminopropylmethyldimethoxysilan, O-Methyl-Carbamatomethyltrimethoxysilan, O-Methyl-Carbamatomethyl-methyldimethoxysilan, Morpholinomethyltriethoxysilan, Cyclohexylaminomethyltriethoxysilan, Methyltriacetoxysilan, Ethyltriacetoxysilan, Di-t-butoxydiacetoxysilan, Methyltris(methylethylketoximo)silan und Vinyltris(methylethylketoximo)silan sowie deren Teilhydrolysate, die ggf. auch durch Cohydrolyse, wie z.B. durch Cohydrolyse von Methyltrimethoxysilan und Dimethyldimethoxysilan, dargestellt werden können.

Die in den erfindungsgemäßen Massen gegebenenfalls eingesetzten Vernetzer (C) sind handelsübliche Produkte bzw. können nach in der Siliciumchemie bekannten Verfahren hergestellt werden.

Falls die erfindungsgemäßen Massen Vernetzer (C) enthalten, handelt es sich um Mengen von vorzugsweise 0,5 bis 10 Gewichtsteilen, besonders bevorzugt 1 bis 3 Gewichtsteilen, jeweils bezogen auf 100 Gewichtsteile Komponente (A). Bevorzugt enthalten die erfindungsgemäßen Massen zusätzlichen Vernetzer (C).

Beispiele für Katalysatoren (D) sind die bisher schon bekannten Titanverbindungen und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid und Umsetzungsprodukte dieser Verbindungen mit Alkoxysilanen, wie Tetraethoxysilan sowie Mischungen oder Umsetzungsprodukte von Titan- oder Zinnverbindungen mit Phosphonsäuren, Phosphonsäureestern oder Phosphorsäureestern, wobei Di-n-butylzinndiacetat und Dibutylzinnoxid in Tetraethylsilikat-Hydrolysat sowie Mischungen oder Umsetzungsprodukte von Titan- oder Zinnverbindungen mit Phosphonsäuren, Phosphonsäureestern oder Phosphorsäureestern bevorzugt sind und Di-n-butylzinnoxid in Tetraethylsilikat-Hydrolysat sowie Mischungen oder Umsetzungsprodukte von Titan- oder Zinnverbindungen mit Alkylphosphonsäuren, Alkylphosphonsäureestern oder Phosphorsäureestern besonders bevorzugt sind.

Falls die erfindungsgemäßen Massen Katalysator (D) enthalten, handelt es sich um Mengen von vorzugsweise 0,01 bis 3 Gewichtsteilen, bevorzugt 0,05 bis 2 Gewichtsteilen, jeweils bezogen auf 100 Gewichtsteile Bestandteil (A).

Beispiele für Weichmacher (E) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, hochsiedende Kohlenwasserstoffe, wie zum Beispiel Paraffinöle, Dialkylbenzole, Dialkylnaphthaline oder Mineralöle bestehend aus naphthenischen und paraffinischen Einheiten, sowie bevorzugt bei silylierten organischen Polymeren als Komponente (A) Polyglykole, insbesondere Polypropylenglykole, die gegebenenfalls substituiert sein können, hochsiedende Ester, wie z.B Phthalate, Zitronensäureester oder Diester von Dicarbonsäuren, flüssige Polyester oder Methacrylate sowie Alkylsulfonsäureester.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Komponente (A).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (F) eingesetzt werden, handelt es sich bevorzugt um hydrophile pyrogene Kieselsäure und gefälltes oder gemahlenes Calciumcarbonat.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Komponente (A).

Beispiele für die in den erfindungsgemäßen Massen gegebenenfalls eingesetzten Haftvermittler (G) sind Silane und Organopolysiloxane mit funktionellen Gruppen, wie beispielsweise solche mit Glycidoxypropyl-, Aminopropyl-, Aminoethylaminpropyl-, U-reidopropyl- oder Methacryloxypropylresten und mit vernetzbaren Gruppen, wie beispielsweise Methoxyreste oder Ethoxyreste. Falls jedoch bereits eine andere Komponente, wie etwa Organosiliciumverbindung (A), (B) oder (C), die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Komponente (A).

Beispiele für Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Hitzeschutzmittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren, Scavenger, wie beispielsweise Si-N-haltige Verbindungen, Thixotropiermittel, wie beispielsweise Phosphorsäureester und Polyglykole, und organische Lösungsmittel, wie Alkylaromate.

Die erfindungsgemäßen Massen enthalten Additive (H) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Insbesondere handelt es sich bei den erfindungsgemäßen Massen um solche, die aus
(A) Organosiliciumverbindungen enthaltend Einheiten der Formel (III),
(B) Organosiliciumverbindung der Formel (II),
   gegebenenfalls
(C) Vernetzer,
   gegebenenfalls
(D) Katalysator,
   gegebenenfalls
(E) Weichmacher,
   gegebenenfalls
(F) Füllstoffen,
   gegebenenfalls
(G) Haftvermittler und
   gegebenenfalls
(H) Additiven
   bestehen.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehalts der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind und über einen langen Zeitraum eine hohe Lagerstabilität aufweisen.

Die erfindungsgemäßen kondensationsvernetzbaren Massen haben den Vorteil, dass sie umweltfreundlich vernetzen.

Die erfindungsgemäßen Massen haben den Vorteil, dass die Umgebung, d.h. angrenzende Materialien, der bei den spezifischen Anwendungen entstehenden Formkörper, wie z.B. Fassadenfugen, Bodenfugen und Bauanschlussfugen, nicht hydrophobiert wird.

Ferner haben die erfindungsgemäßen Massen den Vorteil, dass Tropfen von Wasser oder Glättungsmittel, d.h. Wasser mit Tensid, die bei der jeweiligen Anwendung, z.B. beim Verfugen von Fenstern, auf der Oberfläche der unvernetzten Massen verblieben sind, einen nicht sichtbaren Rückstand hinterlassen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Zur Beurteilung der Hydrophobierung (Test 1) der Umgebung werden ca. 5 mm hohe und 10 mm breite Streifen des pastösen und unvernetzten Dichtstoffes auf Sandstein aufgetragen und nach der Lagerung 7 Tage bei 23°C und 50 % relativer Luftfeuchtigkeit mit Wasser benetzt. Der hydrophobierte Bereich um den Dichtstoff herum wird im mm angegeben.

Zur Beurteilung des Rückstandes von Wassertropfen auf der Oberfläche (Test 2) werden die vernetzbaren Massen in jeweils einer 2 mm dicken Schicht auf PE-Folie aufgetragen und sofort anschließend daran Wassertropfen verschiedener Größen auf der Oberfläche aufgetropft. Während des Aushärtens bei Raumtemperatur wird die Folie waagerecht gelagert, so dass der Wassertropfen sich nicht bewegt und langsam eintrocknet. Nach 24 Stunden wird der Rückstand aus verschiedenen Blickwinkeln bei ca. 50 cm Abstand betrachtet und bewertet. Der Wert 1 bedeutet Rückstand kaum oder nicht sichtbar (abhängig vom Blickwinkel), 2 am Rand oder im Zentrum ein deutlich sichtbarer Rückstand, unabhängig vom Blickwinkel, 3 Rückstand ist deutlich sichtbar, unabhängig vom Blickwinkel.

Der Modul ist der Spannungswert bei 100 % Dehnung gemäß DIN 53504-85 S2.

Me bedeutet gleich Methylrest.

### Beispiel 1

58,5 g 1,2-Propandiol, 210 g Methyltrimethoxysilan, 134 g Hexan und 0,15 g einer 40 %igen Lösung von Tetrabutylphosphoniumhydroxid in Wasser wurden unter dem Ausschluss von Luftfeuchtigkeit 2 Stunden bei 90 - 110°C gerührt und dabei das entstehende Methanol azeotrop abdestilliert. Anschließend wurde abgekühlt und das Produkt mit 3 g saurem Ionenaustauscher auf Polystyrolbasis (käuflich erhältlich unter der Bezeichnung "Purolite CT 169 DR" bei der Fa. Purolite GmbH, Deutschland) neutralisiert und über einen feinen Filter abgefüllt.

Es werden 199 g eines **Siloxanvernetzers B1** erhalten.

Ergebnisse aus der 29-Si-NMR-Analyse:
27,8% MeSi(OMe)₃, 47,0% MeSi(OMe)₂(-O-CH(Me)CH₂-O-)_{1/2}, 21,9% MeSi(OMe)(-O-CH(Me)CH₂-O-)_{2/2} , 2,3 % MeSi (OMe) (-O-CH(Me)CH₂-O-) und 1,0 % MeSi(OMe)₂O_{1/2}. Die Viskosität beträgt 2,0 mm²/s, der Flammpunkt 20°C.
330 g eines Polydimethylsiloxangemischs, bei denen die Siloxane mit Dimethoxymethylsilyl- und Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 80 000 mPa•s, 265 g eines trimethylsilylendblockierten Polydimethylsiloxans mit einer Viskosität von 1000 mPa•s, 7,5 g Methyltrimethoxysilan, 15 g des oben hergestellten Siloxanvernetzers B1, 12,5 g eines Haftvermittlers, der hergestellt wird durch Umsetzung von 1 Teil Aminopropyltriethoxysilan mit 1 Teil Methyltriethoxysilan-Hydrolysat mit einem Ethoxygehalt von 37 %, und 4,5 g Aminopropyltrimethoxysilan werden in einem Planetenmischer miteinander gemischt und 15 Minuten gerührt. Anschließend wird der Ansatz durch homogenes Einmischen von 63 g pyrogener Kieselsäure mit einer spezifischen Oberfläche von 150 m²/g (käuflich erhältlich unter der Bezeichnung HDK® V15 der Wacker Chemie AG), 1,1 g Octylphosphonsäure, 1,4 g eines Polyethylenglykolpolypropylenglykol-copolymers mit einer Viskosität von 700 mPa•s und 2,5 g eines Zinnkatalysators, der hergestellt wird durch Umsetzung von Di-n-butylzinndiacetat und Tetraethoxysilan, vervollständigt.
   Zum Schluss wird die Mischung 5 Minuten bei ca. 100 mbar Absolutdruck gerührt, und luftdicht abgefüllt und gelagert.

Mit der so erhaltenen Masse wurde Test 1 und auch Test 2 durchgeführt. Die Ergebnisse finden sich in Tabelle 1.

Die so erhaltene Masse wurde in einer Dicke von 2 mm auf einer PE-Folie aufgetragen und bei 23°C/50 % rel. Luftfeuchtigkeit gelagert. Nach 7 Tagen Aushärtung wurde der Modul bestimmt. Die Ergebnisse finden sich in Tabelle 1.

### Vergleichsbeispiel 1 (V1)

Die in Beispiel 1 beschriebene Verfahrensweise wird wiederholt mit der Abänderung, dass anstelle von 15 g Siloxanvernetzer B1 14 g Methyltrimethoxsilan eingesetzt werden.
Die Ergebnisse finden sich in Tabelle 1.

### Vergleichsbeispiel 2 (V2)

Die in Beispiel 1 beschriebene Verfahrensweise wird wiederholt mit der Abänderung, dass anstelle von 15 g Siloxanvernetzer B1 33 g eines Methyltrimethoxysilan-Hydrolysates mit einem Methoxygehalt von 29,0 % eingesetzt werden.
Die Ergebnisse finden sich in Tabelle 1.

**Tabelle 1**

| Beispiel | Rückstand von Wassertropfen (Test 2) | Hydrophobierung der Umgebung (Test 1) in mm | Modul N/mm² |
|---|---|---|---|
| 1 | 1 | <1 | 0,40 |
| V1 | 3 | 5-6 | 0,39 |
| V2 | 1-2 | <1 | 0,44 |

## Patentansprüche

1. Durch Kondensationreaktion vernetzbare Massen, die Organosiliciumverbindungen enthaltend Einheiten der Formel
R_{d}XₑSiY_{(4-d-e)/2} (I),
wobei
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und Hydroxylgruppen oder einwertige, hydrolysierbare Reste bedeutet,
Y gleich oder verschieden sein kann und-O- oder zweiwertige Organyloxyreste -OR²O- bedeutet, wobei R² zweiwertige, gegebenenfalls substituierte Kohlenwasserstoffreste, die durch Sauerstoffatome unterbrochen sein können, bedeutet,
d gleich 0, 1, 2 oder 3 ist und
e gleich 0, 1, 2 oder 3 ist,
mit der Maßgabe, dass die Summe d+e≤3 ist, pro Molekül 2 bis 100 Einheiten der Formel (I) vorhanden sind und pro Molekül mindestens 1 Rest Y gleich zweiwertigem Organyloxyrest -OR²O-sowie mindestens ein Rest X anwesend sind,
enthalten.

2. Vernetzbare Massen gemäß Anspruch 1, **dadurch gekennzeichnet, dass** es sich um Verbindungen der Formel
[X₉R_{3-g}SiY_{1/2}-]ₚ [XᵢR₂₋ᵢSiY_{2/2}-]_{q} [XₘR₁₋ₘSiY_{3/2}-]ᵣ [SiY_{4/2}-]ₛ (II)
handelt, wobei
R, X und Y die jeweils oben dafür angegebene Bedeutungen haben, g gleich 0, 1, 2 oder 3 ist,
i 0, 1 oder 2 ist,
m gleich 0 oder 1 ist,
p gleich 0 oder eine ganze Zahl von 1 bis 10 ist,
q gleich 0 oder eine ganze Zahl von 1 bis 90 ist,
r gleich 0 oder eine ganze Zahl von 1 bis 10 ist und
s gleich 0 oder eine ganze Zahl von 1 bis 10 ist,
mit der Maßgabe, dass die Summe (p+q+r+s) eine Zahl von 2 bis 100 ist, die Einheiten statistisch verteilt sein können und pro Molekül mindestens ein Rest Y gleich difunktionellem hydrolysierbaren Rest und mindestens ein Rest X anwesend sind.

3. Vernetzbare Massen gemäß Anspruch 1 oder 2, **dadurch gekennzeichnet, dass** es sich um solche enthaltend
(A) Organosiliciumverbindung mit mindestens zwei kondensationsfähigen Gruppen,
(B) Organosiliciumverbindung enthaltend Einheiten der Formel (I),
gegebenenfalls
(C) Vernetzer,
(D) Katalysator,
gegebenenfalls
(E) Füllstoffen,
gegebenenfalls
(F) Haftvermittler,
gegebenenfalls
(G) Weichmacher und
gegebenenfalls
(H) Additiven
handelt.

4. Vernetzbare Massen gemäß einem oder mehreren der Ansprüche 1 bis 3, **dadurch gekennzeichnet, dass** sie Organosiliciumverbindung (B) in Mengen von 0,5 bis 30 Gewichtsteilen, bezogen auf 100 Gewichtsteile Komponente (A), enthalten.

5. Vernetzbare Massen gemäß einem oder mehreren der Ansprüche 1 bis 4, **dadurch gekennzeichnet, dass** es sich um solche handelt, die aus
(A) Organosiliciumverbindungen enthaltend Einheiten der Formel (III),
(B) Organosiliciumverbindung der Formel (II),
gegebenenfalls
(C) Vernetzer,
gegebenenfalls
(D) Katalysator,
gegebenenfalls
(E) Weichmacher,
gegebenenfalls
(F) Füllstoffe,
gegebenenfalls
(G) Haftvermittler und
gegebenenfalls
(H) Additive
bestehen.

6. Verfahren zur Herstellung der vernetzbaren Massen gemäß einem oder mehreren der Ansprüche 1 bis 5 durch Vermischen aller Bestandteile in beliebiger Reihenfolge.

7. Formkörper, hergestellt durch Vernetzung der Massen gemäß einem oder mehreren der Ansprüche 1 bis 5.

## Claims

1. Compositions crosslinkable via a condensation reaction and which comprise organosilicon compounds containing units of the formula
R_{d}XₑSiY_{(4-d-e)/2} (I),
where
R can be identical or different, and is monovalent, optionally substituted hydrocarbon radicals which can have interruption by oxygen atoms,
X can be identical or different, and is hydroxy groups or monovalent, hydrolysable radicals,
Y can be identical or different, and is -O- or divalent organyloxy radicals -OR²O-, where R² is divalent, optionally substituted hydrocarbon radicals, which can have interruption by oxygen atoms,
d is 0, 1, 2 or 3, and
e is 0, 1, 2 or 3,
with the proviso that d + e ≤ 3, from 2 to 100 units of the formula (I) are present per molecule, and at least 1 radical Y which is a divalent organyloxy radical -OR²O- and at least one radical X are present per molecule.

2. Crosslinkable compositions according to Claim 1, **characterized in that** they are compounds of the formula
[X₉R_{3-g}SiY_{1/2}-]ₚ [XᵢR₂₋ᵢSiY_{2/2}-]_{q} [XₘR₁₋ₘSiY_{3/2}-]ᵣ [SiY_{4/2}-]ₛ (II)
where
R, X and Y are respectively as defined above,
g is 0, 1, 2 or 3,
i is 0, 1 or 2,
m is 0 or 1,
p is 0 or a whole number from 1 to 10,
q is 0 or a whole number from 1 to 90,
r is 0 or a whole number from 1 to 10, and
s is 0 or a whole number from 1 to 10,
with the proviso that (p + q + r + s) is a number from 2 to 100, the distribution of the units can be random and at least one radical Y which is a difunctional hydrolysable radical and at least one radical X are present per molecule.

3. Crosslinkable compositions according to Claim 1 or 2, **characterized in that** they are compositions comprising
(A) organosilicon compound having at least two condensable groups,
(B) organosilicon compound containing units of the formula (I),
and optionally
(C) crosslinking agent,
(D) catalyst,
and optionally
(E) fillers,
and optionally
(F) adhesion promoter,
and optionally
(G) plasticizer, and
optionally
(H) additives.

4. Crosslinkable compositions according to one or more of Claims 1 to 3, **characterized in that** they comprise amounts of from 0.5 to 30 parts by weight, based on 100 parts by weight of component (A), of organosilicon compound (B).

5. Crosslinkable compositions according to one or more of Claims 1 to 4, **characterized in that** they are compositions composed of
(A) organosilicon compounds containing units of the formula (III),
(B) organosilicon compound of the formula (II),
and optionally
(C) crosslinking agent,
and optionally
(D) catalyst,
and optionally
(E) plasticizer,
and optionally
(F) fillers,
and optionally
(G) adhesion promoter, and
optionally
(H) additives.

6. Process for the preparation of the crosslinkable compositions according to one or more of Claims 1 to 5, via mixing of all of the constituents in any desired sequence.

7. Moulding, produced via crosslinking of the compositions according to one or more of Claims 1 to 5.

## Revendications

1. Masses réticulables par une réaction de condensation, qui contiennent des composés organosiliciés contenant des unités de formule
R_{d}XₑSiY_{(4-d-e)/2} (I) ,
où
R peut être identique ou différent et signifie des radicaux hydrocarbonés monovalents, le cas échéant substitués, qui peuvent être interrompus par des atomes d'oxygène,
X peut être identique ou différent et signifie des groupes hydroxyle ou des radicaux monovalents, hydrolysables,
Y peut être identique ou différent et signifie -O-
ou des radicaux organyloxy divalents -OR²O-, où R² signifie des radicaux hydrocarbonés, divalents, le cas échéant substitués, qui peuvent être interrompus par des atomes d'oxygène,
d vaut 0, 1, 2 ou 3 et
e vaut 0, 1, 2 ou 3,
à condition que la somme d + e ≤ 3, qu'il existe par molécule 2 à 100 unités de formule (I) et qu'il existe par molécule au moins 1 radical Y représentant un radical organyloxy divalent -OR²O- ainsi qu'au moins un radical X.

2. Masses réticulables selon la revendication 1, **caractérisées en ce qu'**il s'agit de composés de formule
[X_{g}R_{3-g}SiY_{1/2}-] ₚ[XᵢR₂₋ᵢSiY_{2/2}-] _{q}[XₘR₁₋ₘSiY_{3/2}-] ᵣ[SiY_{4/2}-]ₛ (II)
où
R, X et Y ont à chaque fois la signification indiquée ci-dessus,
g vaut 0, 1, 2 ou 3,
i vaut 0, 1 ou 2,
m vaut 0 ou 1,
p vaut 0 ou un nombre entier de 1 à 10,
q vaut 0 ou un nombre entier de 1 à 90,
r vaut 0 ou un nombre entier de 1 à 10 et
s vaut 0 ou un nombre entier de 1 à 10,
à condition que la somme (p + q + r + s) soit égale à un nombre de 2 à 100, que les unités puissent être réparties statistiquement et qu'il existe par molécule au moins un radical Y représentant un radical hydrolysable difonctionnel et au moins un radical X.

3. Masses réticulables selon la revendication 1 ou 2, **caractérisées en ce qu'**il s'agit de masses contenant
(A) un composé organosilicié présentant au moins deux groupes condensables,
(B) un composé organosilicié contenant des unités de formule (I) ,
le cas échéant
(C) un réticulant,
(D) un catalyseur,
le cas échéant
(E) des charges,
le cas échéant
(F) un promoteur d'adhérence,
le cas échéant
(G) un plastifiant et
le cas échéant
(H) des additifs.

4. Masses réticulables selon l'une ou plusieurs des revendications 1 à 3, **caractérisées en ce qu'**elles contiennent le composant organosilicié (B) en des quantités de 0,5 à 30 parties en poids, par rapport à 100 parties en poids de composant (A).

5. Masses réticulables selon l'une ou plusieurs des revendications 1 à 4, **caractérisées en ce qu'**il s'agit de celles qui sont constituées par
(A) des composés organosiliciés contenant des unités de formule (III),
(B) un composé organosilicié de formule (II),
le cas échéant
(C) un réticulant,
le cas échéant
(D) un catalyseur,
le cas échéant
(E) un plastifiant,
le cas échéant
(F) des charges,
le cas échéant
(G) un promoteur d'adhérence et
le cas échéant
(H) des additifs.

6. Procédé pour la préparation des masses réticulables selon l'une ou plusieurs des revendications 1 à 5 par mélange de tous les constituants dans un ordre quelconque.

7. Corps façonnés, préparés par réticulation des masses selon l'une ou plusieurs des revendications 1 à 5.
